# EUROPEAN PATENT APPLICATION

(11) **EP 0 538 653 A1**
(43) Date of publication of application: **28.04.1993**
(21) Application number: 92116593.2
(22) Date of filing: 29.09.1992
(51) Int. Cl.: F26B 17/20

(54) **A machine for processing material in general by centrifuging and thermal treatment**

(30) Priority: 25.10.1991 IT MI912848
(71) Applicant: VOMM IMPIANTI E PROCESSI S.r.L., I-20090 Cesano Boscone - Milano (IT)
(72) Inventor: Vezzani, Corrado, I-20146 Milano (IT)
(74) Representative: Vannini, Torquato

(57) **Abstract**

A machine for processing material in general by centrifuging and thermal treatment having a casing (11) defining an internal processing chamber (12) housing a rotor (13) with blades (14); the casing (11) is provided with means (20) for heating or cooling its walls; in order to satisfy the requirement for easy, fast and complete access to the processing chamber (12), the casing (11) is made up of at least two elements (15) fixed to each other so as to be movable apart.

## Description

The present invention relates to a machine for processing material in general by centrifuging and thermal treatment.

Prior art machines for processing material in general by centrifuging and thermal treatment include a casing defining an internal processing chamber which houses a bladed rotor; the casing is provided with means for heating or cooling the walls of the casing itself.

The casing may be cylindrical or conical and has closing walls at its opposite ends. The rotor includes a shaft positioned along the longitudinal axis of the casing; this shaft protrudes from the casing though the closing walls to rest on suitable external supports and is connected by appropriate transmission means to an electric motor which drives the rotor. The walls of the casing may be heated or cooled by forming an interspace in the casing between an outer wall and an inner wall of the casing itself and by passing heating or cooling fluid through this interspace; the casing may also be heated by electrical resistances wound round the external surface of the casing.

The material to be processed is introduced into the chamber though an appropriate inlet at one end of the chamber itself and is advanced by the rotor towards the opposite end of the chamber where it is unloaded though an appropriate outlet. The rotor makes the material advance in such a way as to maintain it under agitation and in contact with the inner wall of the casing so that it receives or loses heat by conduction. In some cases a heat exchange fluid is also passed through the chamber, either with the flow or against the flow, in order to achieve a direct heat exchange between the fluid itself and the material.

Machines such as that described above find various applications, being used, for example, to mix, to dry, to granulate, to carry out chemical reactions, etc.

The use of such machines is greatly affected by the need for easy and rapid access to the processing chamber, in particular to the rotor, for a wide variety of reasons: for example for inspection, for thorough cleaning, for maintenance, for adjusting the rotor blades, for replacing parts, etc.

Unfortunately, prior art arrangements do not meet this requirement satisfactorily.

In some cases, access to the processing chamber is through portholes or doors formed in the walls closing the ends of the casing or though the inlet passages and/or outlet passages for the material and/or for the heat exchange fluid. In such cases inspection is only partial; in addition thorough cleaning is impossible and access for work on the rotor or on other parts inside the chamber is even less possible.

Another prior art arrangement involves making the end walls removable; in this way it is possible, in particular, to remove all or any part of the rotor from the processing chamber by sliding it out of the chamber either for access to the chamber itself or to enable work to be carried out freely on the rotor itself. This operation of removing the rotor, apart from being time consuming and requiring enough space to remove the rotor and special external equipment to support the rotor, also necessitates the presence of specialized personnel and involves complicated mechanical manoeuvres. In addition, if the machine is large and the rotor especially large and heavy, exceptional external lifting means (wheeled hoists, lift trucks, bridge supports etc.) are needed to lift the rotor. Finally, in the case of machines with high-precision casings and rotors, there is a risk that such difficult manoeuvres, carried out in less than ideal conditions or with non-specialized personnel, might damage the inner surface of the casing or the rotor blades.

The aim of the present invention is to provide a machine of the type described above that is able fully to satisfy the aforementioned requirement of fast, easy and full access to the processing chamber.

This aim is achieved by a machine for processing material in general by centrifuging and thermal treatment, which includes a casing defining an internal processing chamber which houses a bladed rotor, the casing being provided with means for heating or cooling its walls, characterised in that the casing is formed by at least two elements fixed to each other so as to be movable apart.

In order to understand the characteristics and advantages of the present invention, there follows a description of an embodiment given as a non-limitative example and illustrated in the appended drawings, in which:
Figure 1 is a front perspective view of a machine according to the invention in an open configuration;

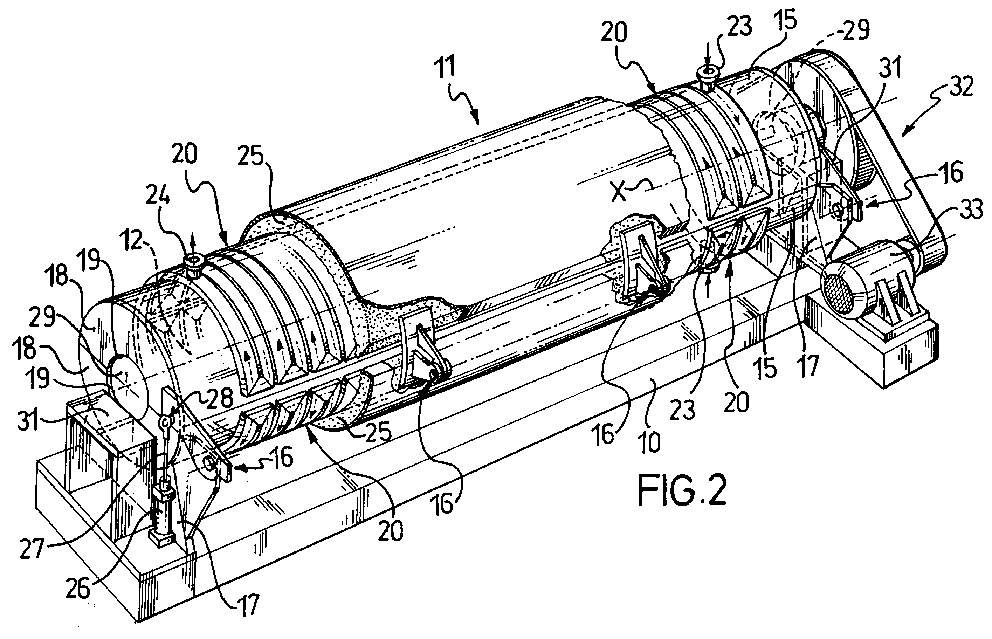

Figure 2 is a rear perspective view of the machine of Figure 1 in a closed configuration; and
Figure 3 shows an enlarged detail of the machine of Figure 1.

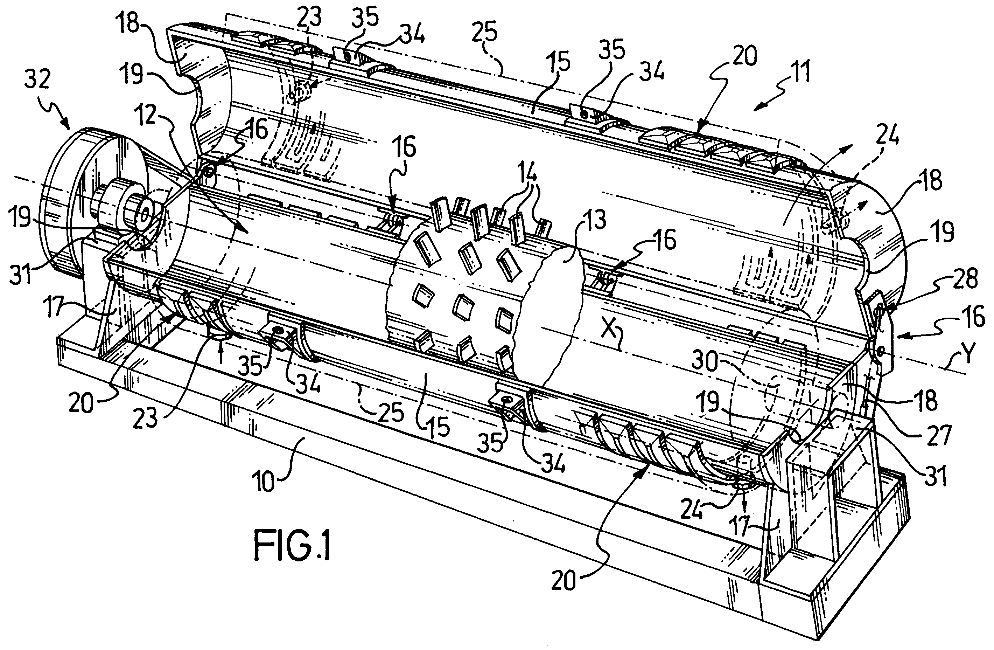

The machine of Figure 1 includes a support structure 10 on which is mounted a cylindrical casing, generally indicated 11, defining an internal processing chamber 12.

The processing chamber 12 houses a rotor 13, with blades 14, the axis X of rotation of which coincides with the axis of the cylindrical casing 11.

The casing 11 is formed by two concave elements constituted by two half-shells 15 joined by hinges 16 the hinge axis Y of which is parallel to the axis X.

The lower half-shell 15 rests at either end on two shoulders 17 of the support structure 10.

The half-shells 15 each have two end half-walls 18 provided with recesses 19.

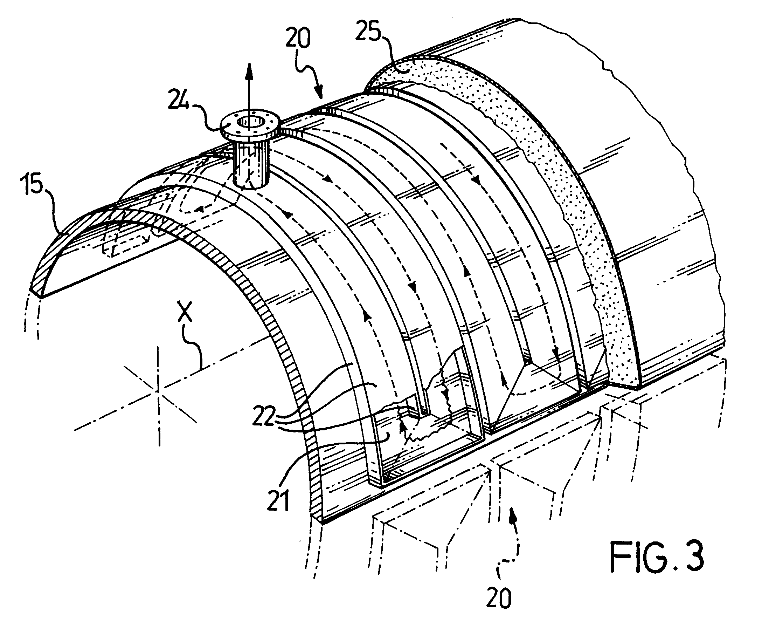

A serpentine duct 20 is formed on the external surface of each half-shell 15 and extends along most of this external surface. As shown in Figure 3, the serpentine duct 20 has a rectangular cross-section with one wall 21 formed by the wall of the half-shell 15 itself and the other three walls 22 belonging to a C-section box structure fitted to the wall of the half-shell 15. At one, entry end of the duct 20 an inlet 23 is fitted for the introduction of fluids into the duct while at the other, exit end of the duct 20 an outlet 24 is fitted for fluids to leave the duct. The duct 20 is fitted with a cover 25 of thermally-insulating material fixed to the half-shell 15.

The upper half-shell 15 pivots, thanks to the hinges 16, relative to the lower half-shell 15. This pivoting is effected by an hydraulic cylinder 26 fixed to the support structure 10 and the drive shaft 27 of which acts at a point 28 of an end hinge 16 offset from the axis Y.

By acting on the hydraulic cylinder 26 it is therefore possible to open and close the casing 11 by pivoting the upper half-shell 15 relative to the lower half-shell 15.

When the casing 11 is in a closed configuration, the recesses 19 form two holes 29 in the ends of the casing 11 itself for the shaft 30 of the rotor 13 to pass through. The shaft 30 is supported by support surfaces 31 of the support structure 10 and is connected by a belt drive assembly 32 to an electric motor 33.

In order to close the casing 11, each half-shell 15 is provided with brackets 34 with holes 35, so positioned that, when the casing 11 is in a closed configuration, the hole 35 of one bracket 34 of one half-shell is aligned with the hole 35 of a corresponding bracket 34 of the other half-shell. The corresponding brackets 34 are then clamped together by bolts which pass through the holes 35.

The machine as described and illustrated processes material by centrifuging and thermal treatment as explained in the introduction. Obviously, the casing 11 is provided with openings, not illustrated here, for the input and output of the material. For thermal treatments, heating or cooling fluid is introduced, as required, through the inlets 23 of the serpentine ducts 20; with reference to each duct 20, the fluid flows through the entire duct along its sinuous path so as to exchange heat with the material being processed through the wall of the respective half-shell 15; at the end of the duct the fluid exits through the outlet 24. The heat-insulating cover 25 avoids heat loss to the outside.

The possibility of opening the casing 11 by pivoting the upper half-shell 15 relative to the lower half-shell 15 gives easy, fast and full access to the processing chamber 12 and the rotor 13, as is clear from Figure 1. This access is also helped by the incorporation of opening means, in this case the hydraulic cylinder 26, in the machine.

The provision of a duct for heating or cooling fluid on each half-shell 15 and the serpentine shape of each duct avoid any disadvantages due to thermal expansion or contraction of the casing which could even cause fracturing of the casing itself. The above characteristics mean that thermal expansion or contraction is restricted to limited areas, thereby limiting their extent. This is also helped by the fact that one wall of the serpentine duct is the wall of the casing 11 itself. This latter characteristic also provides for efficient heat exchange between the heating or cooling fluid and the material being processed.

It is clear that variations and/or additions may be made to the embodiment described and illustrated here.

Access to the processing chamber by the hinged opening of the two half-shells as described above proves particularly easy and efficient.

It is, however, not possible to rule out other arrangements in which the casing includes, generically, at least two elements fixed to each other so as to be movable apart.

For example, the casing could by made up of two half-shells simply resting one on the other and, obviously, fixed to each other by appropriate means. To open the casing, once the fixing measn had been released, the upper half-shell would simply be lifted by suitable lifting equipment which could, but need not, be incorporated in the machine.

Within the scope of the hinge arrangement, it is possible to provide for the casing to be made up of at least two elements hinged along different axes and variously arranged.

The shape of the casing does not need to be cylindrical but may vary.

Various means may be used to open the machine casing or to move the elements of the casing in relation to each other.

The serpentine ducts are advantageous in practice for the reasons given earlier. However other heating or cooling means could be used, such as jackets or variously shaped tubes for the passage of heating or cooling fluid, electrical resistances, or the like, positioned along the outer surface of the casing.

## Claims

1. A machine for processing material in general by centrifuging and thermal treatment, including a casing (11) defining an internal processing chamber (12) housing a rotor (13) provided with blades (14), the casing (11) being provided with means (20) for heating or cooling its walls, characterised in that the casing (11) is made up of at least two elements (15) fixed to each other so as to be movable apart.

2. A machine according to Claim 1, characterised in that the said elements are constituted by two half-shells (15) hinged to each other.

3. A machine according to Claim 2, characterised in that an axis of the casing (11) and the axis (X) of the rotor (13) coincide and the hinge axis (Y) of the two half-shells (15) is parallel to the said axis (X) of the casing (11).

4. A machine according to Claim 1, characterised in that the said elements (15) are provided with means (34, 35) for clamping them together.

5. A machine according to Claim 1, including actuator means (26) for moving the said elements (15) apart.

6. A machine according to Claim 1 or 2, in which the said means for heating or cooling the walls of the casing (11) comprise a serpentine duct (20) fixed to the external surface of each of the said elements (15) of the casing (11), the said duct (20) extending along the surface of the respective element (15).

7. A machine according to Claim 6, in which one wall (21) of each duct (20) is formed by the wall of the respective element to which the duct (20) is fixed.

8. A machine according to Claim 6, in which each duct (20) is covered by a thermally-insulating cover (25).
